# EUROPÄISCHE PATENTSCHRIFT

(11) **EP 3 020 285 B1**
(45) Veröffentlichungstag und Bekanntmachung des Hinweises auf die Patenterteilung: **02.10.2019**
(21) Anmeldenummer: 14003790.4
(22) Anmeldetag: 11.11.2014
(51) Int. Cl.: C12C 3/08, A23L 33/135, A23L 33/105, A23L 7/25, C12C 12/04, C12C 12/00, C12C 7/047

(54) **ZUSAMMENSETZUNG UMFASSEND SAUERGUT, CEREALIENMEHL UND HOPFEN**
COMPOSITION COMPRISING SOURPRODUCT, CEREAL FLOUR AND HOPS
COMPOSITION COMPRENANT UN PRODUIT ACIDIFÉ, DE LA FARINE DE CÉRÉALE ET DU HOUBLON

(43) Veröffentlichungstag der Anmeldung: 18.05.2016
(73) Patentinhaber: Weissenbacher, Ernst Rainer, 80331 München (DE)
(72) Erfinder: Weissenbacher, Ernst Rainer, 80331 München (DE); Back, Werner, 85354 Freising (DE)
(74) Vertreter: Würmser, Julian

(56) Entgegenhaltungen:
- EP-A1- 2 399 982
- WO-A1-00/24864
- WO-A1-2010/084018
- DE-A1-102009 020 386
- DE-A1-102010 031 536
- DE-U1-202005 017 892
- DE-U1-202009 013 228
- DATABASE WPI Week 200849 Thomson Scientific, London, GB; AN 2008-H69988 XP002739023, & RU 2 329 649 C1 (VORON TECHN ACAD) 27. Juli 2008 (2008-07-27)
- Bohak I., Back W., Ricjter l., Ehrmann M., Ludwig W. and Schleifer K.H.: "Lactobacillus amylolyticus sp. nov. Isolated from Beer Malt and Beer Wort", Systematic and Applied Microbiology, Bd. 21, Nr. 3 August 1998 (1998-08), Seiten 360-364, XP002739024, DOI: 10.1016/S0723-2020(98)80045-3 Gefunden im Internet: URL:http://ac.els-cdn.com/S072320209880045 3/1-s2.0-S0723202098800453-main.pdf?_tid=6 9fe9e48-f886-11e4-b828-00000aacb35f&acdnat =1431421871_244a317537aea5840c32226b94e466 41 [gefunden am 2015-04-22]
- Biendl M.: "Development of new plant extracts rich in hop polyphenols", Proceedings of 31st EBC Congress 2007 - Venice , 2007, XP002739025, Gefunden im Internet: URL:http://www.hopsteiner.de/fileadmin/red eakteur/pdf/hopfenprodukte/antioxidative-p rodukte/dvlp_newplantextractsrichpolypheno ls.pdf [gefunden am 2015-04-28]
- Liu D.J., Pomeranz, and Robbins G.S.: "Mineral content of developing and malted barley", American Association of cereal Chemists, 1975, XP002739026, Gefunden im Internet: URL:http://www.aaccnet.org/publications/cc /backissues/1975/Documents/Chem52_678.pdf [gefunden am 2015-04-22]

## Beschreibung

Die vorliegende Erfindung betrifft eine Zusammensetzung, Verfahren zu deren Herstellung und deren Verwendung, insbesondere als Nahrungsmittel oder Nahrungsergänzungsmittel. Insbesondere betrifft die Erfindung ein Nahrungsmittel oder ein Nahrungsergänzungsmittel, welches die erfindungsgemäße Zusammensetzung umfasst.

Bier wird seit mehreren tausend Jahren als Nahrungsmittel verwendet. Sowohl die Rohstoffe, die bei der Bierbereitung verwendet werden als auch der Herstellungsprozess tragen dazu bei, dass Bier ein breites Spektrum von ernährungsphysiologisch wertvollen Inhaltsstoffen aufweist. Neben Mineralstoffen und Vitaminen liegen im Bier u.a. auch eine Reihe von sekundären Pflanzeninhaltsstoffen, sog. Polyphenolen, vor, die als besonders wertvoll gelten. Polyphenole wirken als Antioxidantien, sie neutralisieren freie Radikale. Daher gelten Polyphenole als gefäßprotektiv und als besonders nützlich in der Prävention und Behandlung von Herzkreislauferkrankungen. Durch die Reduktion von freien Radikalen wird zudem die Schädigung des Erbguts in den Körperzellen reduziert, was langfristig der Entstehung von Krebs entgegenwirkt. Diesbezüglich gilt beispielsweise das im Hopfen enthaltene Xanthohumol als besonders wirksam, welches darüber hinaus u.a. über antivirale und antiinflammatorische Aktivität verfügt.

Die EP 2 399 982 A1 beschreibt ein Verfahren zur Herstellung eines dauerhaft trüben Getränks aus 100% Buchweizenmalz mit niedrigem Alkoholgehalt, bei dem zunächst eine Maische aus dem Buchweizenmalz hergestellt wird, die anschließend weiteren Schritten, wie der Fermentation, unterzogen werden kann.

Die WO 2010/084018 A1 beschreibt ein Verfahren zur Herstellung eines Getränks, bei dem zunächst ein Malz hergestellt wird, aus dem anschließend unter Zusatz von Hefe und, gegebenenfalls getrennt davon, Milchsäurebakterien ein Umsetzungsprodukt hergestellt wird. Im Verfahren gemäß der WO 2010/084018 A1 wird die Würze "geläutert", um überschüssige Stärkebestandteile von den in Wasser löslichen Bestandteilen (überwiegend lösliche Saccharide und weitere niedermolekulare Bestandteile) zu trennen.

Die DE 10 2009 020 386 A1 beschreibt ein Verfahren zur Herstellung von Kwasswürze bzw. ein Kwasswürzekonzentrat, bei dem eine Zusammensetzung aus 20% fermentiertem Kwassmalz, 15% Gerstenmalz, 25% Gerste und 40% Roggenmalz zu einer Maische umgesetzt und anschließend geläutert wird. Anschließend wird das erhaltene Produkt durch Zusatz von sowohl Hefe als auch Milchsäure generierenden Bakterien zu Kwass umgesetzt.

Die RU 23 29 649 C1 beschreibt ein Verfahren zur Herstellung einer Nährstoffmischung für flüssigen Roggensauerteigstarter, der aus Mehl, Wasser und Hopfenextrakt besteht.

In der Praxis stößt der Einsatz von Bier als Nahrungsergänzungsmittel jedoch an gewisse Grenzen: Einerseits müssten angesichts der z.T. geringen Konzentrationen einiger Inhaltsstoffe große Mengen an Bier konsumiert werden, um bestimmte Zielmengen zu erreichen. Während die Aufnahme von beispielsweise mehreren Litern Bier bereits aufgrund des hohen Volumens meist nicht praktikabel ist, kann Bier zudem aufgrund seines Alkoholgehalts nicht von allen Personen bzw. nicht in allen Situationen beliebig konsumiert werden.

Eine Aufgabe der vorliegenden Erfindung besteht somit in der Bereitstellung eines Nahrungsergänzungsmittels, welches günstige Inhaltsstoffe von Bier bzw. Hopfen enthält, einfach herzustellen ist und zudem Alkohol, wenn überhaupt, nur in einer Menge enthält, die bei normaler Anwendung des Nahrungsergänzungsmittels beim Menschen nicht zu den üblicherweise mit Alkoholkonsum verbundenen unerwünschten Nebenwirkungen, insbesondere Beeinträchtigungen der kognitiven Fähigkeiten, führt.

Diese Aufgabe wird durch den Gegenstand der Patentansprüche und die darin spezifizierten Ausführungsformen gelöst.

Durch die vorliegende Erfindung wird u.a. eine Zusammensetzung bereitgestellt, welche mindestens die folgenden drei Komponenten umfasst:
a. Sauergut;
b. Cerealienmehl; und
c. Hopfen und/oder ein Hopfenprodukt ausgewählt aus der Gruppe bestehend aus Hopfenpulver, Treberpellets und Hopfenextrakt,
wobei das Sauergut eine ungehopfte oder schwach gehopfte Vorderwürze aus dem Brauprozess ist, die mit Milchsäurebakterien vergoren wurde, und wobei das Sauergut homofermentative Milchsäurebakterien enthält.

Erfindungsgemäß werden die drei oben genannten Komponenten (und optional weitere Zusatzstoffe) gemischt und zu einer Zusammensetzung verarbeitet. Die erhaltene Zusammensetzung kann in flüssiger, halbflüssiger bzw. halbfester oder fester Form vorliegen und wird bevorzugt oral eingenommen. Die Zusammensetzung kann direkt als Nahrung oder als Nahrungsergänzungsmittel eingesetzt werden oder anderen Lebensmitteln oder Nahrungsergänzungsmitteln zugesetzt werden.

Typischerweise wird die Zusammensetzung erhalten, indem die Inhaltsstoffe in Form einer Suspension gemischt werden. Optional kann die Zusammensetzung weiter prozessiert, insbesondere thermisch behandelt, konzentriert und/oder getrocknet, werden, wodurch beispielsweise die Lagerfähigkeit oder die Stabilität bestimmter Inhaltsstoffe erhöht werden kann.

Durch die vorliegende Erfindung werden eine Zusammensetzung, ein Nahrungsmittel oder ein Nahrungsergänzungsmittel, ein Verfahren zur Herstellung der Zusammensetzung sowie Verwendungen der erfindungsgemäßen Zusammensetzung bereitgestellt. Die Erfinder haben eine Zusammensetzung zum Einsatz als Nahrungsergänzungsmittel entwickelt, die überraschenderweise aus leicht zugänglichen Grundstoffen zur Bierherstellung unter geringem technischen Aufwand herzustellen ist. Vorteilhafterweise enthält die Zusammensetzung eine besondere Kombination und Anreicherung von ernährungsphysiologisch wertvollen Substanzen, wodurch die Zusammensetzung hervorragend als Nahrungsmittelergänzung geeignet ist.

Im Rahmen der Erfindung bezeichnet der Begriff "Sauergut" eine ungehopfte oder schwach gehopfte Vorderwürze aus dem Brauprozess, die mit Milchsäurebakterien vergoren wurde. Der Begriff Sauergut bezieht sich insbesondere auf Bierwürze aus der Bierherstellung, die mit lebenden Milchsäurebakterien versetzt und zumindest teilweise vergoren wurde. Typischerweise wird Sauergut durch (zumindest teilweise) Vergärung von Vorderwürze gewonnen. Als "Vorderwürze" wird in diesem Zusammenhang die von Feststoffen befreite Maische bezeichnet, wie sie z.B. nach dem Läutern bei der Bierherstellung erhalten werden kann. Im Kontext der vorliegenden Erfindung umfasst der Begriff "Bierwürze" auch diejenigen Teile des Malzextrakts, die beim Läutern durch die Vorderwürze und die Nachgüsse erhalten werden. Im Sinne der Erfindung umfasst der Begriff "Sauergut" auch alle anderen Vorstufen und Zwischenprodukte der Bierherstellung, die mit Milchsäurebakterien, bevorzugt homofermentativen Milchsäurebakterien, versetzt und (zumindest teilweise) vergoren wurden.

Erfindungsgemäß enthält das Sauergut vorwiegend oder ausschließlich homofermentative Milchsäurebakterien. Dabei können die Bakterien entweder einer Art bzw. einem Stamm angehören oder eine Mischung von Bakterien verschiedener Arten bzw. Stämme sein. Bei der homofermentativen Milchsäuregärung wird Zucker vorwiegend zu Milchsäure umgesetzt. Die Milchsäurebakterien im Sinne der Erfindung bilden mehr Lactat als Acetat und/oder Ethanol. Bevorzugt bilden die Milchsäurebakterien über 75 Gew.-% Milchsäure, noch bevorzugter über 85 Gew.% Milchsäure, noch bevorzugter über 90 Gew.-% Milchsäure. In einer Ausführungsform der Erfindung liegt der Anteil der von den Milchsäurebakterien gebildeten Milchsäure bei 70 bis 100 Gew.-%, bevorzugt bei 75 bis 90 Gew.-%. Die von den im Sauergut enthaltenen Milchsäurebakterien gebildete Milchsäure ist zu mindestens 30 Gew.-%, bevorzugt zu mindestens 50 Gew.-%, bevorzugter zu mindestens 75 Gew.-%, noch bevorzugter zu mindestens 85 Gew.-% rechtsdrehende Milchsäure. In einer bestimmten Ausführungsform beträgt der Anteil der rechtsdrehenden Milchsäure an der insgesamt gebildeten Milchsäure von 30 bis 100 Gew.-%, bevorzugt von 35 bis 99 Gew.-%, bevorzugter von 40 bis 95 Gew.-%, noch bevorzugter von 50 bis 100 Gew.-% oder von 50 bis 95 Gew.-%.

In einer Ausführungsform der Erfindung enthält das Sauergut Milchsäurebakterien, die weniger als 5 Vol.-%, bevorzugt weniger als 2 Vol.-%, noch bevorzugter weniger als 0,5 Vol.-% Acetat und/oder Ethanol als Fermentationsprodukt bilden. In einer besonders bevorzugten Ausführungsform bilden die Milchsäurebakterien kein Acetat und/oder kein Ethanol. Die fertige Zusammensetzung enthält weniger als 2 Vol.-% Ethanol, bevorzugt weniger als 1 Vol.-% Ethanol, noch bevorzugter weniger als 0,1 Vol.-% Ethanol. Erfindungsgemäß bevorzugte Milchsäurebakterien enthalten mindestens ein Enzym, das zur vollständigen Glykolyse von Zucker fähig ist.

Bevorzugt enthält das Sauergut im Sinne der vorliegenden Erfindung brauereispezifische Milchsäurebakterien, d.h. Milchsäurebakterien, die üblicherweise im Brauprozess zum Einsatz kommen. Typischerweise werden bereits mit den Rohstoffen Milchsäurebakterien in das Sauergut eingebracht. Alternativ oder in Ergänzung dazu können dem Sauergut auch Milchsäurebakterien zugegeben werden, die aus geeigneten Bakterienkulturen stammen.

Als Beispiele für im Sinne der Erfindung geeignete homofermentative Milchsäurebakterien seien insbesondere Bakterien der Gattung *Lactobacillus* genannt, z.B. *L. casei, L. perolens, L. rossiae, L. delbrueckii, L. amylovorus* oder *L. amylolyticus.* In einer bestimmten Ausführungsform enthält das Sauergut Milchsäurebakterien der Gattung *Pediococcus,* bevorzugt *Pediococcus dextrinicus.* In einer bevorzugten Ausführungsform der Erfindung enthält das Sauergut Milchsäurebakterien ausgewählt aus der Gruppe bestehend aus *L. amylolyticus, L. perolens, L. casei* und *P. dextrinicus.* Das Sauergut enthält bevorzugt eine Mischung von verschiedenen homofermentativen Milchsäurebakterienstämmen.

In einer bevorzugten Ausführungsform der Erfindung enthält das Sauergut mindestens zwei verschiedene homofermentative Milchsäurebakterienstämme. Bevorzugt enthält das Sauergut einen ersten Milchsäurebakterienstamm, welcher rechts- und/oder linksdrehende Milchsäure produziert (z.B. *L. amylolyticus*), und zudem einen zweiten Milchsäurebakterienstamm, der ausschließlich rechtsdrehende Milchsäure produziert (z.B. *L. casei, L. perolens, P. dextrinicus*). Die Stämme können dabei derselben oder unterschiedlichen Spezies angehören. Dabei ist der erste und/oder der zweite Milchsäurebakterienstamm bevorzugt probiotisch. In einer bevorzugten Ausführungsform ist der erste Milchsäurebakterienstamm probiotisch. Im Sinne der Erfindung bezeichnet der Begriff 'probiotisch' typischerweise lebende Milchsäurebakterien, die bei oraler Verabreichung die Darmflora eines Subjekts unterstützen oder verbessern können. Insbesondere bezeichnet der Begriff solche Milchsäurebakterien, die bei oraler Aufnahme nach Passage durch den Magen noch in ausreichender Anzahl (lebend) vorhanden sind, um im Dünndarm bzw. im Dickdarm eine positive Wirkung zu entfalten. Typischerweise sind probiotische Bakterien demnach zumindest teilweise resistent gegen Magensäure und Galle.

In einer besonders bevorzugten Ausführungsform enthält das Sauergut Milchsäurebakterien der Spezies *L. amylolyticus,* bevorzugt eines probiotischen Stammes von *L. amylolyticus,* und zudem eine Milchsäurebakterienspezies, die vorwiegend oder ausschließlich rechtsdrehende Milchsäure produziert, wie z.B. *L. casei, L. perolens, P. dextrinicus*)*.*

Bevorzugt enthält das Sauergut mehr als 10⁴, 10⁵ oder 10⁶, bevorzugt mehr als 10⁵, bevorzugter mehr als 5x10⁶, noch bevorzugter ca. 10⁷ Milchsäurebakterien, im toten oder lebenden Zustand, pro Mililiter Sauergut. In einer besonders bevorzugten Ausführungsform enthält das Sauergut mehr als 10⁴, 10⁵ oder 10⁶, bevorzugt mehr als 10⁵, bevorzugter mehr als 5x10⁶, noch bevorzugter ca. 10⁷ lebende Milchsäurebakterien pro Mililiter Sauergut.

In einer bevorzugten Ausführungsform ist das Sauergut in der Zusammensetzung durch Milchsäurebakterien (zumindest teilweise) vergoren, wobei bevorzugt im Sauergut enthaltene Kohlenhydrate oder Zucker zu Milchsäure umgewandelt werden. Die Milchsäurekonzentration im vergorenen Sauergut beträgt bevorzugt mindestens 0,2 Gew.-%, bevorzugter mindestens 0,5 Gew.-%, noch bevorzugter ca. 1-2 Gew.-%. In einer bevorzugten Ausführungsform ist Alkohol im vergorenen Sauergut nicht oder im Wesentlichen nicht (weniger als 0,5 Gew.-%, bevorzugt weniger als 0,1 Gew.-%) enthalten. Der pH-Wert des vergorenen Sauerguts liegt in einer bevorzugten Ausführungsform unter 7,0, bevorzugt unter 5,5, noch bevorzugter unter 4,5, noch bevorzugter unter 3,5. In einer bestimmten Ausführungsform liegt der pH-Wert des vergorenen Sauerguts ungefähr bei 3,5 bzw. in einem Bereich von 3 bis 4,5, bevorzugt in einem Bereich von 3,5 bis 4,0.

Das Sauergut, das für die erfindungsgemäße Zusammensetzung verwendet wird, besteht vor allem aus Kohlenhydraten (z.B. β-Glucan, Dextrin, Stärke oder Zucker), bevorzugt aus einer Mischung aus Stärke und Zucker. Durch die Vergärung von Zucker (beispielsweise Einfach- oder Zweifachzuckern) zu Milchsäure ist der Gehalt der Zusammensetzung an Einfachzuckern oder Zweifachzuckern niedrig, bevorzugt unter 3 Gew.-%, noch bevorzugter unter 2 Gew.-%. Der Gesamtgehalt an Proteinen, Peptiden und Aminosäuren im Sauergut liegt typischerweise bei ca. 0,1 bis 2 Gew.-%, bevorzugt bei 0,3 bis 0,8 Gew.-%, noch bevorzugter bei 0,4 bis 0,7 Gew.-%. In einer bestimmten Ausführungsform beträgt der Gesamtgehalt an Proteinen, Peptiden und Aminosäuren im Sauergut ca. 0,6 Gew.-%. Außerdem sind bevorzugt Vitamine (besonders der B-Gruppe, z.B. Vitamin B9), Polyphenole und Mineralstoffe im Sauergut enthalten. Im Kontext der Erfindung werden als "Polyphenole" sekundäre Pflanzeninhaltsstoffe bezeichnet. Insbesondere umfasst der Begriff "Polyphenole" aromatische Verbindungen, die zwei oder mehr direkt an einen aromatischen Ring gebundene Hydroxygruppen enthalten wie z.B. Flavonoide. Der Begriff "Polyphenol" betrifft beispielsweise auch Catechin, Astragalin, Epicatechin, Quercetin, Quercetin-Glucoside, Quercetin-Malonat, Xanthohumol, Isoxanthohumol, Rutin, Gallussäure oder Isoflavone.

Unter dem Begriff "Cerealienmehl" (das die Komponente (b) in der Zusammensetzung darstellt) werden im Rahmen der Erfindung allgemein mechanisch zerkleinerte Teile von Getreiden und Gräsern zusammengefasst. Insbesondere bezieht sich der Begriff auf Mehl, das durch Zermahlen der Fruchtkörper von Süßgräsern oder durch Zermahlen von deren Keimlingen gewonnen wurde. "Süßgräser" im Sinne der Erfindung sind dabei sowohl einzelne Gräserarten als auch Hybride, die durch Kreuzung einzelner Arten entstanden sind. Ein Cerealienmehl, das in der erfindungsgemäßen Zusammensetzung enthalten ist, kann entweder Mehl nur einer Pflanzenart bzw. Pflanzensorte enthalten oder auch ein Gemisch von Mehlen, die von verschiedenen Pflanzenarten bzw. Pflanzensorten stammen. Insbesondere kommen gemäß der Erfindung Gerstenmehl, Roggenmehl, Dinkelmehl, Weizenmehl, Triticalemehl, Reismehl, Maismehl oder Hirsemehl als Cerealienmehl zum Einsatz.

Bevorzugt wird Cerealienmehl verwendet, das sich durch einen hohen Gehalt an Ballaststoffen (insbesondere an β-Glucan, Dextrinen, Zellulosen, Hemizellulosen und/oder Pentosanen) auszeichnet. In einer bestimmten Ausführungsform enthält das Cerealienmehl mindestens 10 Gew.-% Ballaststoffe, bevorzugt mindestens 15 Gew.-% Ballaststoffe, noch bevorzugter mindestens 17 Gew.-% Ballaststoffe. In einer weiteren Ausführungsform sind mindestens 5 Gew.-%, bevorzugt mindestens 10 Gew.-%, noch bevorzugter mindestens 15 Gew.-%, beispielsweise zwischen 5 und 70 Gew.-%, bevorzugt zwischen 10 und 40 Gew.-% der Ballaststoffe im Cerealienmehl β-Glucan. In einer bestimmten Ausführungsform sind etwa 20 Gew.-% der Ballaststoffe im Cerealienmehl β-Glucan. Bevorzugt wird die Menge des Cerealienmehls in der Zusammensetzung so eingestellt, dass sich ein Gesamtballaststoffgehalt von mindestens 1 g/kg, bevorzugt mindestens 3 g/kg, bevorzugter mindestens 5 g/kg, noch bevorzugter mindestens 10 g/kg ergibt. Zusätzlich oder alternativ dazu wird die Menge des Cerealienmehls in der Zusammensetzung bevorzugt so eingestellt, dass sich ein β-Glucangehalt von mindestens 0,2 g/kg, bevorzugt mindestens 0,6 g/kg, bevorzugter mindestens 1 g/kg, noch bevorzugter mindestens 2 g/kg ergibt. Besonders bevorzugt ist die Verwendung von Gerstenmehl als Cerealienmehl. Um eine glutenfreie Zusammensetzung zu erhalten, wird bevorzugt Reis-, Mais- oder Hirsemehl als Cerealienmehl verwendet. In einer bevorzugten Ausführungsform umfasst die Zusammensetzung gemäß der Erfindung Reis-, Mais- oder Hirsemehl als Cerealienmehl (als Komponente a) und Sauergut, welches aus den Rohstoffen Reis, Mais oder Hirse hergestellt wurde (als Komponente b).

Bevorzugt wird ein Cerealienmehl verwendet, das sich durch einen hohen Gehalt an Ballaststoffen, bevorzugt den hierin genannten Ballaststoffen, besonders bevorzugt β-Glucan, sowie durch einen hohen Gehalt an Silicaten, Zink, Phosphor, Kalium und/oder Magnesium auszeichnet. In einer bevorzugten Ausführungsform enthält das Cerealienmehl mindestens eine Substanz, die ausgewählt ist aus der Gruppe bestehend aus Silicium, Silicaten, Kieselsäuren, Siliciumdioxid, Siliciumhalogeniden, organischen Siliciumverbindungen. Im Rahmen der Erfindung werden die zuvor genannten Substanzen auch unter den Begriffen "Silicat" oder "Silicium" zusammengefasst. Bevorzugt ist eine Zusammensetzung in Form einer flüssigen Suspension, welche die besonders gut resorbierbare Orthokieselsäure enthält. In einer bestimmten Ausführungsform beträgt der Gehalt an Silicaten im Cerealienmehl mindestens 1 g/kg, bevorzugt 5 g/kg, bevorzugter mindestens 10 g/kg, noch bevorzugter mindestens 30 g/kg. Gemäß einer Ausführungsform der Erfindung beträgt der Gehalt an Silicaten im Cerealienmehl von 5 g/kg bis 50 g/kg. In einer bestimmten Ausführungsform wird als Cerealienmehl Gerstenmehl mit einem hohen Gehalt an SiO₂ verwendet. Bevorzugt enthält das Cerealienmehl neben Silicaten auch Zink, Phosphor, Kalium und Magnesium.

In einer bevorzugten Ausführungsform wird das Cerealienmehl aus kommerziell verfügbaren Malzen gewonnen. Alternativ werden die Cerealien vor dem Mahlen zu Cerealienmehl gewässert und optional bei der jeweils für die Keimung geeigneten Temperatur inkubiert. Dieser Inkubationsschritt dauert mindestens 24 Stunden, bevorzugt mindestens 2 Tage, noch bevorzugter mindestens 3, 4 oder 5 Tage. Die Bedingungen und die Inkubationsdauer werden bevorzugt so gewählt, dass cytolytische, proteolytische und/oder amylolytische Enzyme gewonnen werden können. Die so angekeimten Cerealien werden nach dem Inkubationsschritt schonend (bevorzugt bei relativ niedriger Temperatur und/oder geringer Feuchtigkeit) abgedarrt, um insbesondere die Aktivität der cytolytischen, proteolytischen und/oder amylolytischen Enzyme zu erhalten.

Als dritte Komponente (Komponente c) enthält die Zusammensetzung Hopfen und/oder ein Hopfenprodukt ausgewählt aus der Gruppe bestehend aus Hopfenpulver, Hopfenpellets und Hopfenextrakt.

Unter dem Begriff "Hopfen" werden im Kontext der Erfindung Rohhopfen sowie frische oder weiter verarbeitete Teile von Hopfenpflanzen zusammengefasst. Dabei schließt der Begriff Hopfen einer beliebigen Sorte ein und bezieht sich sowohl auf Bittersorten als auch auf Aromasorten. Bevorzugt werden Aromasorten oder solche Sorten verwendet, die einen hohen Gehalt an Polyphenolen haben. Insbesondere umfasst der Begriff Hopfenblüten, bevorzugt weibliche Blütenstände (sog. Dolden oder Zapfen) oder Teile von Hopfenblüten. In bestimmten Ausführungsformen werden die Hopfenpflanzenteile getrocknet (gedarrt) und/oder mechanisch bearbeitet. In einer bevorzugten Ausführungsform werden Hopfendolden durch Vermahlung und Pressung in Hopfenpellets verarbeitet. In einer anderen Ausführungsform wird Hopfenpulver in der Zusammensetzung verwendet, welches durch Mahlen von Hopfenpflanzenteilen, bevorzugt von Dolden, erhalten wird. Vor dem Mahlen werden die Dolden gewöhnlich tiefgekühlt. Optional können Hopfenpflanzenteile, Hopfenpulver oder Hopfenpellets vor dem Hinzufügen zu den anderen Komponenten der Zusammensetzung (z.B. in Wasser) eingeweicht oder mit anderen Substanzen vorbehandelt werden. Im Sinne der Erfindung kann ein bestimmtes Hopfenausgangsmaterial (z.B. Hopfenextrakt) als Komponente c in der Zusammensetzung verwendet werden. Es können jedoch auch Rohhopfen und ein oder mehrere Hopfenprodukte (z.B. Hopfenpellets) in Kombination zum Einsatz kommen.

Der Begriff "Hopfenextrakt" bezeichnet einen flüssigen Auszug aus Hopfenpflanzenteilen, bevorzugt aus weiblichen Hopfenblüten oder Bestandteilen davon. Hopfenextrakte können durch Extraktion mit flüssigem Kohlendioxid und/oder Ethanol erhalten werden. Durch die Wahl des Extraktionsmittels (beispielsweise Kohlendioxid oder Alkohol (z.B. Ethanol)) wird in entscheidendem Maße beeinflusst, wie groß der Anteil der Polyphenole (wie etwa Xanthohumol) im Extrakt bzw. in den Rückständen (d.h. in den Hopfenpflanzenteilen nach Extraktion) ist. Typischerweise liefert z.B. die Ethanolextraktion Extrakte mit höheren Polyphenolkonzentrationen, wohingegen z.B. eine Extraktion mit Kohlendioxid dazu führt, dass Polyphenole zumindest teilweise in den Hopfenpflanzenteilen zurückbleiben. Um also einen Extrakt mit beispielsweise höherer Xanthohumolkonzentration zu erhalten, wird in der Regel ein Extrakt mit einem Extraktionsmittel (wie z.B. Ethanol) angefertigt, mit dem eine möglichst große Menge an Polyphenolen extrahiert wird. Sollen Polyphenole und Xanthohumol zumindest teilweise in den Hopfenpflanzenteilen verbleiben, wird typischerweise mit einem Extraktionsmittel (wie z.B. Kohlendioxid) extrahiert, das relativ geringe Mengen an Polyphenolen aus den Hopfenpflanzenteilen extrahiert. Die mit Kohlendioxid extrahierten Hopfenpflanzenteile haben üblicherweise einen niedrigeren Gehalt an Bitterstoffen und enthalten gleichzeitig noch Polyphenole (insbesondere Xanthohumol). In einer bevorzugten Ausführungsform wird Hopfen zunächst (bevorzugt tiefgekühlt) gemahlen und anschließend unter Druck mit Kohlendioxid extrahiert. In dieser Ausführungsform werden bevorzugt die Rückstände der Extraktion (d.h. die (ggf. weiterverarbeiteten) extrahierten Hopfenplanzenteile als Komponente c der Zusammensetzung verwendet. In einer anderen Ausführungsform wird Hopfen mit Ethanol extrahiert, was typischerweise zu einer höheren Konzentration von Polyphenolen (wie etwa Xanthohumol) im Extrakt führt. In dieser Ausführungsform wird bevorzugt der polyphenolhaltige Extrakt als Komponente c der Zusammensetzung verwendet.

Bevorzugt kommt ein entbitterter Gerbstoffextrakt, wie z.B. der Sorte "Hallertauer Tradition" (Fa. Hopsteiner), zum Einsatz. Dieser enthält keine Pflanzenmatrix, statt dessen hohe Gehalte an Polyphenolen (mindestens 3 Gew.-%, bevorzugt 3 bis 7 Gew.-%, beispielsweise ca. 5 Gew.-%). Diese sekundären Pflanzeninhaltsstoffe haben eine hohe antioxidative Wirkung (Zell- und Gefäßschutz), wobei spezielle besonders wertvolle Polyphenole (ca. 1 Gew.-%) vorliegen. Dazu gehören insbesondere Catechin, Astragalin, Epicatechin, Quercetin-Glucoside, Quercetin-Malonat, Xanthohumol, Rutin und/oder Isoflavone.

Es können alternativ oder zusätzlich auch Hopfenpellets (oder Hopfentreberpellets) in der Zusammensetzung verwendet werden. Hopfenpellets werden durch Zermahlen von (bevorzugt tiefgekühltem) Rohhopfen und anschließender Pressung in Pellets hergestellt. In einer bestimmten Ausführungsform werden Hopfenpellets der Sorte Taurus (Fa. Hopsteiner) oder ein äquivalentes Hopfenprodukt verwendet. Es handelt sich dabei um den gepressten Rückstand von Hopfenpflanzenteilen, die einer Extraktion mit Kohlendioxid unterzogen wurden und somit weniger Bitterstoffe und Hopfenöl als Rohhopfen enthält (z.B. 30 Gew.-% weniger als Rohhopfen). Bevorzugt bestehen Hopfenpellets zu etwa 60 Gew.-% bis 90 Gew.-%, bevorzugter etwa 80 Gew.-%, aus Pflanzenmatrix, wovon wiederum etwa 10 Gew.-% bis 40 Gew.-%, bevorzugt etwa 20 Gew.-%, in einem geeigneten Lösungsmittel, bevorzugt einem Alkohol wie z.B. Ethanol, lösbar sind.

In einer anderen Ausführungsform kommt Hopfenpulver (z.B. der Fa. Hopsteiner) zum Einsatz. Es handelt sich bei Hopfenpulver insofern um eine Vorstufe für die Herstellung von Hopfenpellets, als auch bei der Herstellung von Hopfenpellets der Hopfen typischerweise zunächst tiefgekühlt gemahlen wird. Bezüglich der Inhaltsstoffe liegen hier ähnliche Verhältnisse wie beim Rohhopfen (einschl. Pflanzenmatrix) vor, wobei wertloses Stengel- und Blattmaterial bevorzugt abgereichert wird.

Da Bitterstoffe und Öle im Hopfenpulver ebenso wie im Rohhopfen oder in Hopfenpellets aus Rohhopfen noch enthalten sein können, erfolgt bevorzugt eine geschmackliche Abrundung, die gewöhnlich durch Versuche ermittelt wird. Bevorzugt wird durch Versuche eine geschmackliche Abrundung der Komponente c ermittelt. Alternativ kann die geschmackliche Abrundung auch in der erfindungsgemäßen Zusammensetzung (d.h. nach Zugabe aller drei Komponenten a bis c) erfolgen. Als mögliche Zusätze zur Geschmacksabrundung (nach Reinheitsgebot) kommen weiterhin beispielsweise dunkles Malz, Karamelmalz, Röstgerste oder Röstmalzbier in Betracht. Bevorzugt enthält ein weiterer Zusatz auch Melanoidine, die zudem antioxidativ wirksam sind und als Träger für schlecht wasserlösliche Inhaltsstoffe, wie z.B. bestimmte Vitamine oder Xanthohumol, fungieren können.

Die Menge der eingesetzten Komponente c der Zusammensetzung richtet sich nach dem Verwendungszweck der Zusammensetzung und nach den Inhaltsstoffen des jeweils verwendeten Ausgangsmaterials. Durch Anpassung der jeweiligen Menge von Rohhopfen, Hopfenextrakt, Hopfenpellets oder Hopfenpulver wird bevorzugt die gewünschte Endkonzentration an Inhaltsstoffen in der Zusammensetzung gemäß der Erfindung erzielt. Bevorzugt wird die Menge des jeweiligen Ausgangsmaterials für Komponente c so gewählt, dass sich in der erfindungsgemäßen Zusammensetzung ein bestimmter Gehalt an Polyphenolen ergibt. Beispielsweise kann die Menge des jeweiligen Ausgangsmaterials so eingestellt werden, dass sich ein Polyphenolgehalt der Zusammensetzung von mindestens 20 mg/kg, bevorzugt mindestens 50 mg/kg, noch bevorzugter mindestens 100 mg/kg ergibt. In einer bevorzugten Ausführungsform wird die Menge des jeweiligen Ausgangsmaterials für Komponente c so gewählt, dass sich in der erfindungsgemäßen Zusammensetzung ein bestimmter Gehalt an Xanthohumol und/oder Quercetin-Verbindungen ergibt. In einer bestimmten Ausführungsform wird die Menge des Ausgangsmaterials der Komponente c so eingestellt, dass sich in der Zusammensetzung eine finale Xanthohumol-Konzentration von mindestens 1 mg/kg, bevorzugt mindestens 5 mg/kg, noch bevorzugter mindestens 10 mg/kg und noch bevorzugter mindestens 50 mg/kg oder 100 mg/kg ergibt. Gleichzeitig oder alternativ dazu kann die Menge des Ausgangsmaterials der Komponente c so gewählt werden, dass sich in der Zusammensetzung eine finale Konzentration an Quercetin-Verbindungen von mindestens 1 mg/kg, bevorzugt mindestens 5 mg/kg, noch bevorzugter mindestens 10 mg/kg ergibt.

So wird beispielsweise beim Einsatz von 10 g der Komponente c (beispielsweise eines Hopfenextrakts) pro Kilogramm bzw. pro Liter der erfindungsgemäßen Zusammensetzung bevorzugt eine Konzentration von z.B. ca 2 mg Xanthohumol pro Liter bzw. pro Kilogramm Fertigprodukt erhalten. Dies entspricht etwa der doppelten Menge im Vergleich zu üblichem Bier, welches typischerweise 0,8 mg Xanthohumol pro Liter enthält. Zur Erhöhung des Xanthohumol-Gehalts stehen auch spezielle Xanthohumol-angereicherte Produkte der Fa. Hopsteiner zur Verfügung. Bei der Verwendung von z.B. Xantho-Flav (Xanthohumol-Gehalt: 10 Gew.-%) wird durch den Einsatz von 0,1 g pro Kilogramm oder pro Liter der Zusammensetzung eine finale Xanthohumol-Konzentration von 10 mg/kg oder 10 mg/l erhalten.

In einer bevorzugten Ausführungsform enthält die Zusammensetzung mindestens 10 Gew.-% Sauergut, bevorzugt mindestens 30 Gew.-% Sauergut, noch bevorzugter von 30 bis 50 Gew.-% Sauergut. In einer besonders bevorzugten Ausführungsform umfasst die Zusammensetzung mindestens 50 Gew.-% Sauergut, bespielsweise von 50 bis 90 Gew.-% Sauergut, bevorzugt von 50 Gew.-% bis 60 Gew.-% Sauergut. Alternativ kann der Anteil von Sauergut in der Zusammensetzung von 60 bis 90 Gew.-% betragen. Der Anteil von Cerealienmehl bzw. Hopfen und/oder Hopfenprodukt können im Bereich von jeweils ca. 1 bis 40 Gew.-% liegen, bevorzugt im Bereich von 1 bis 10 Gew.-%. In einer bevorzugten Ausführungsform beträgt der Anteil von Sauergut (Komponente a) in der Zusammensetzung von 40 bis 60 Gew.-%, während die Anteile von Cerealienmehl (Komponente b) bzw. Hopfen und/oder Hopfenprodukt (Komponente c) den Rest der Zusammensetzung ausmachen.

In einer bevorzugten Ausführungsform werden die Mengen der Komponenten a, b und c so eingestellt, dass sich eine Zusammensetzung ergibt, welche die folgenden Inhaltsstoffe in den angegebenen Konzentrationen enthält:

| | |
|---|---|
| Milchsäure (vorwiegend rechtsdrehend): | ca. 5 - 20 g/l |
| Bakterien: | 10⁵ - 10⁸ Zellen/ml |
| Gesamtballaststoffe: | 2 - 10 g/l |
| β-Glucan: | 0,2 - 2 g/l |
| SiO₂: | 50 - 400 mg/l |
| Zink: | 20 - 35 mg/l |
| Gerbstoffe (Polyphenole): | 0,2 - 1 g/l |
| Xanthohumol: | 1 - 100 mg/l |
| Quercetin-Verbindungen: | 1 - 10 mg/l |

Bevorzugt liegen in der erfindungsgemäßen Zusammensetzung folgende Vitamine in den angegebenen Konzentrationen vor:

| | |
|---|---|
| Pyridoxin B6: | 2 - 10 mg/l |
| Niacin B2: | 3 - 10 mg/l |
| Cobalamin B12: | 0,5 - 5 µg/l |
| Pantothensäure B5: | 0,5 - 6 mg/l |
| Folsäure B9: | 0,1 - 5 µg/l |
| Riboflavin B2: | 0,1 - 1,0 mg/l |
| Biotin H: | 1 - 40 µg/l |
| Thiamin B1: | 0,05 - 1,0 mg/l |
| Vitamin D: | 0,2 - 10 µg/l |

Der pH-Wert der Zusammensetzung beträgt weniger als 7. In einer Ausführungsform der Erfindung beträgt der pH-Wert der Zusammensetzung weniger als 6, bevorzugt weniger als 5,5, bevorzugter weniger als 5, noch bevorzugter weniger als 4,5. In einer bevorzugten Ausführungsform liegt der pH-Wert der Zusammensetzung in einem Bereich von 3,5 bis 7, bevorzugt in einem Bereich von 4 bis 6, bevorzugter in einem Bereich von 4 bis 5, noch bevorzugter in einem Bereich von 4 bis 4,5. Der saure pH-Wert der Zusammensetzung wirkt sich positiv auf die Lagerfähigkeit bzw. auf die Haltbarkeit der Zusammensetzung aus. In einer bevorzugten Ausführungsform beträgt der pH-Wert der Zusammensetzung 4,5 oder weniger als 4,5 und die Zusammensetzung ist thermisch behandelt, bevorzugt durch Pasteurisierung. Dadurch wird eine ungekühlte Lagerung der Zusammensetzung ermöglicht. In einer bestimmten Ausführungsform wird die Zusammensetzung thermisch behandelt durch kurzzeitiges Erhitzen auf bis zu 140° Celsius, bevorzugt auf bis zu 120°, 100°, 90°, 80°, 75°, 70°, 65°, 60°, 55° oder 50° Celsius. Typischerweise wird die Zusammensetzung in dieser Ausführungsform bei einer Temperatur in einem Bereich von 50° bis 120° Celsius, bevorzugt in einem Bereich von 50° bis 70°, von 55° bis 75°, von 60° bis 80°, von 70° bis 90°, von 80° bis 100°, von 90° bis 110° oder von 100° bis 120° Celsius thermisch behandelt. Die Erwärmung dauert dabei üblicherweise weniger als 15 Minuten, für gewöhnlich nur wenige Minuten oder Sekunden, bevorzugt weniger als 12, 11, 10, 9, 8, 7, 6, 5, 4 oder 3 Minuten, bevorzugter weniger als 120 Sekunden, noch bevorzugter weniger als 60 Sekunden. In einer Ausführungsform wird die Zusammensetzung für eine Dauer von 3 bis 15 Minuten, bevorzugt von 5 bis 12 Minuten thermisch behandelt. Alternativ wird die Zusammensetzung für eine Dauer von 15 bis 180 Sekunden, bevorzugt von 20 Sekunden bis 150 Sekunden, bevorzugter von 25 bis 120 Sekunden oder von 15 bis 90 Sekunden erwärmt. In einer bevorzugten Ausführungsform wird die Zusammensetzung für ca. 10 Minuten auf ca. 65° C erwärmt.

Die Zusammensetzung kann in flüssiger, halbflüssiger bzw. halbfester oder fester Form vorliegen. In einer Ausführungsform der Erfindung ist die Zusammensetzung eine Emulsion oder eine Suspension, welche z.B. in konzentrierter Form als Sirup, Paste oder Gel vorliegen kann. Alternativ kann die Zusammensetzung getrocknet werden, sodass ein Pulver, ein Granulat, Flocken, Chips oder dergleichen erhalten werden.

Die erfindungsgemäße Zusammensetzung wird bevorzugt ohne weitere Verarbeitung als Nahrungsmittel oder als Nahrungsergänzungsmittel verwendet. Alternativ kann die Zusammensetzung auch anderen Lebensmitteln, anderen Nahrungsergänzungsmitteln oder auch Medikamenten beigemengt werden, wie beispielsweise Milchprodukten (wie etwa Joghurt, Trinkjoghurt, Buttermilch, Kefir, Milkshakes, Frischkäse, Streichkäse o.ä.), Pasten (z.B. einem Brotaufstrich), Limonaden, Fruchtsäften, Smoothies, Tee, Teemischgetränken (wie etwa grünem Tee) oder Kaffee.

Durch Beimengung weiterer Zusatzstoffe zu der erfindungsgemäßen Zusammensetzung kann optional der Geschmack, der Geruch, die Farbe und/oder die Konsistenz der Zusammensetzung modifiziert werden. Im Rahmen der Erfindung kann die Zusammensetzung dementsprechend natürliche, naturidentische oder künstliche Aromen (z.B. Malz-, Frucht- oder Hopfenaromen), Süßungsmittel (z.B. Fructose oder Honig), Lebensmittelfarbstoffe oder Verdickungsmittel (z.B. Xanthan, Pektin oder Guarkernmehl) enthalten. In einer Ausführungsform der Erfindung enthält die Zusammensetzung zudem lebensmittelrechtlich zugelassene Konservierungsmittel, um die Haltbarkeit der Zusammensetzung zu erhöhen.

Ein weiterer Aspekt der vorliegenden Erfindung ist somit die Bereitstellung eines Nahrungsmittels oder eines Nahrungsergänzungsmittels, das die erfindungsgemäße Zusammensetzung enthält.

In einer Ausführungsform der Erfindung wird die Zusammensetzung, bevorzugt in halbfester Form, optional mit weiteren Zutaten, beispielsweise als Paste, bereitgestellt, wobei die Zusammensetzung insbesondere als Brotaufstrich (oder beispielsweise auch als Würzmittel) verwendet werden kann. Dabei ist die Konzentration der erfindungsgemäßen Zusammensetzung in der Paste bevorzugt so gewählt, dass mit der üblicherweise in einer Mahlzeit (beispielsweise mit einer Scheibe Brot) aufgenommenen Menge (z.B. ca. 10 ml) der Tagesbedarf eines Erwachsenen an einem oder mehreren der Inhaltsstoffe der erfindungsgemäßen Zusammensetzung (z.B. an β-Glucan oder an einem der enthaltenen Vitamine) gedeckt ist. Die Paste kann beispielsweise in einem wiederverschließbaren Behälter (z.B. einer Tube) bereitgestellt werden. Vorteilhafterweise zeichnet sich die erfindungsgemäße Zusammensetzung, insbesondere bei der Bereitstellung als Paste, durch eine hervorragende Haltbarkeit bzw. Stabilität der wirksamen Inhaltsstoffe aus.

Ein weiterer Gegenstand der vorliegenden Erfindung ist ein Verfahren zur Herstellung der oben beschriebenen Zusammensetzung, welches die folgenden Schritte umfasst:
a. Herstellen einer Suspension aus Sauergut, Cerealienmehl und Hopfen oder einem Hopfenprodukt;
b. Trocknung und/oder Pasteurisation der Suspension.

Vorteilhafterweise werden in Schritt a des Verfahrens Naturprodukte als Ausgangsmaterialien eingesetzt, die keiner weiteren Aufbereitung oder Aufreinigung bedürfen. Als Ausgangsmaterial können die in der Brauerei üblichen Grundstoffe verwendet werden. Hierbei wird typischerweise eine Komponente, vorzugsweise in flüssiger Form, vorgegeben und die weiteren Komponenten (in flüssiger, fester oder halbfester Form) beispielsweise unter Mischen zur vorgegebenen Komponente hinzugegeben. Bei der vorgegebenen Komponente kann es sich um die Komponente a, das Sauergut, handeln.

Darüber hinaus erfordert weder das Herstellen der Suspension in Schritt a noch die Trocknung und/oder Pasteurisation der Suspension in Schritt b einen hohen apparativen Aufwand, sondern können z.B. mit den in Brauereien und Lebensmittelbetrieben üblichen Geräten durchgeführt werden.

Die Trocknung dient einerseits zur Einstellung der Konsistenz der Zusammensetzung, andererseits kann durch thermische Behandlung die mikrobiologische Haltbarkeit der Zusammensetzung erhöht werden. Die Trocknung erfolgt bevorzugt durch mäßige Erwärmung der Zusammensetzung auf maximal 80 Grad Celsius, bevorzugt maximal 70 Grad Celsius, noch bevorzugter maximal 60 Grad Celsius. In einer bevorzugten Ausführungsform wird die Zusammensetzung bei einer mittleren Temperatur von 40-60 Grad Celsius getrocknet und/oder pasteurisiert. Gemäß einer Ausführungsform der Erfindung wird die Zusammensetzung als Suspension hergestellt und mittels eines in der Lebensmittelindustrie üblichen Verfahrens getrocknet. Beispiele für Trocknungsverfahren umfassen u.a. Wirbelschichttrocknungsverfahren, Walzentrocknungsverfahren oder Sprühtrocknungsverfahren. In einer besonders bevorzugten Ausführungsform wird die Suspension in einem Sprühtrocknungsverfahren getrocknet.

Die (optionale) thermische Behandlung der Zusammensetzung (z.B. durch Pasteurisierung) wird dabei bevorzugt unter Einhaltung der oben im Kontext der Zusammensetzung beschriebenen Parameter (insbesondere Dauer der Erwärmung, Temperatur) durchgeführt.

Durch die besondere Kombination von Inhaltsstoffen wirkt die Zusammensetzung (bzw. das Nahrungsmittel oder Nahrungsergänzungsmittel) in mehrfacher Hinsicht zudem positiv auf den Verdauungstrakt. So wirken Milchsäurebakterien, vorwiegend rechtsdrehende Milchsäure, Ballaststoffe und die in der Zusammensetzung enthaltenen Enzyme in der Kombination, wie sie in der Zusammensetzung vorliegt, besonders vorteilhaft auf die Darmflora und die Darmtätigkeit, beispielsweise auf die Darmmotilität.

Zudem ist die spezifische Kombination von Antioxidantien (Polyphenole wie z.B. Quercetin, Xanthohumol, Catechin), Milchsäure und (optional bei Einsatz von dunklen Malzen) Melanoidinen (insbesondere Pronyl-Lysin) besonders wirksam hinsichtlich der Zell- und Gefäßprotektion.

Die Zusammensetzung ist besonders arm an Zuckern, da diese im Sauergut weitgehend zu Milchsäure vergoren werden. Somit ist die Zusammensetzung oder das Nahrungsergänzungsmittel bei entsprechender Gesamteinstellung auch für Diabetiker geeignet.

Der niedrige Kalziumgehalt und der hohe Magnesiumgehalt der Zusammensetzung wirken der Bildung von Gallen- und Nierensteinen entgegen.

Polyphenole (Flavonoide) sind insbesondere in Kombination mit Vitamin B9 wirksam gegen Arteriosklerose und Entzündungsprozesse allgemein (z.B. ausgelöst durch pathogene Keime). Herz-Kreislauf-Erkrankungen wird zudem durch einen hohen Kaliumgehalt bei gleichzeitig niedrigem Natriumgehalt vorgebeugt.

Zudem ist die Zusammensetzung durch ihren hohen Gehalt an biologisch verfügbaren Silicatverbindungen besonders wirksam bei Osteoporose, insbesondere bei postmenopausaler Osteoporose.

Die folgenden Beispiele sollen die vorliegende Erfindung weiter veranschaulichen, ohne deren Gegenstand dadurch zu beschränken.

### Beispiele

### Herstellung der Zusammensetzung

Zunächst wird eine flüssige Suspension auf der Basis von Sauergut hergestellt mit folgender Zusammensetzung:
1 I Sauergut
10 g Gerstenmehl
10 g Gerbstoffextrakt (alternativ: Hopfenpellets oder Hopfenpulver)
0,1 - 1 g Xantho-Flav ohne Kieselgur
Entsprechend Süßungskomponente zur Abrundung (z.B. Fructose oder Honig) Aromatisierung (dezente Malz- oder Hopfennote oder Fruchtaromatisierung)

Die Komponenten werden gemischt und die erhaltene Suspension bei einer Temperatur von 65 Grad Celsius für 10 Minuten gerührt.

Die so erhaltene Zusammensetzung enthält die folgenden Substanzen in den genannten Konzentrationen:
Milchsäure (vorwiegend rechtsdrehend) ca. 10-15 g/l
Zellmaterial 10⁷ Zellen/ml (probiotisch in wissenschaftlichen Vortests)
Gesamtballaststoffe ca. 5g/l
β-Glucan ca. 10 g/l
SiO₂ ca. 300 mg/l
Zink 20-35 mg/l (empfohlene Tagesdosis 10 mg)
Gerbstoffe (Polyphenole) 0,2 g/l
Xanthohumol ca. 10 - 100 mg/l
Quercetin-Verbindungen ca. 1 - 10 mg/l
Pyridoxin B6 ca. 0,6 mg/l
Niacin B2 ca. 7,7 mg/l
Cobalamin B12 0,8 µg/l
Pantothensäure B5 ca. 1,5 mg/l
Folsäure B9 ca. 400 µg/l
Riboflavin B2 ca. 0,35 mg/l
Biotin H ca. 12 µg/l
Thiamin B1 ca. 0,3 mg/l
Vitamin D 1 µg/l

## Patentansprüche

1. Zusammensetzung, welche mindestens die folgenden drei Komponenten umfasst:
a. Sauergut;
b. Cerealienmehl; und
c. Hopfen und/oder ein Hopfenprodukt ausgewählt aus der Gruppe bestehend aus Hopfenpulver, Hopfenpellets und Hopfenextrakt,
wobei das Sauergut eine ungehopfte oder schwach gehopfte Vorderwürze aus dem Brauprozess ist, die mit Milchsäurebakterien vergoren wurde, und
wobei das Sauergut homofermentative Milchsäurebakterien enthält.

2. Zusammensetzung nach Anspruch 1,
wobei das Sauergut Milchsäurebakterien der Spezies *L. amylolyticus,* und Milchsäurebakterien eines Stammes, der vorwiegend oder ausschließlich rechtsdrehende Milchsäure produziert, enthält.

3. Zusammensetzung nach einem der Ansprüche 1 bis 2,
wobei das Cerealienmehl β-Glucan enthält.

4. Zusammensetzung nach einem der Ansprüche 1 bis 3,
wobei das Cerealienmehl mindestens 5 Gew.-% β-Glucan enthält.

5. Zusammensetzung nach einem der Ansprüche 1 bis 4,
wobei das Cerealienmehl mindestens eine Substanz enthält, die ausgewählt ist aus der Gruppe bestehend aus Silicium, Silicaten, Kieselsäuren, Siliciumdioxid, Siliciumhalogeniden, organischen Siliciumverbindungen, Zink, Phosphor, Kalium und Magnesium.

6. Zusammensetzung nach einem der Ansprüche 1 bis 5,
wobei die Zusammensetzung einen Polyphenolgehalt von mindestens 50 mg/kg aufweist.

7. Zusammensetzung nach einem der Ansprüche 1 bis 6,
wobei die Zusammensetzung einen Xanthohumolgehalt von mindestens 5 mg/kg aufweist.

8. Zusammensetzung nach einem der Ansprüche 1 bis 7,
wobei die Zusammensetzung einen Quercetingehalt von mindestens 5 mg/kg aufweist.

9. Zusammensetzung nach einem der Ansprüche 1 bis 8,
wobei die Zusammensetzung in Form einer Lösung, eine Suspension, einer Emulsion, einer Paste, eines Pulvers, eines Granulats oder in Form von Chips, Flocken, Tabletten oder Kapseln vorliegt.

10. Nahrungsmittel oder Nahrungsergänzungsmittel, das die Zusammensetzung nach einem der Ansprüche 1 bis 9 enthält.

11. Verfahren zur Herstellung der Zusammensetzung nach einem der Ansprüche 1 bis 9,
wobei das Verfahren die folgenden Schritte umfasst:
a. Herstellen einer Suspension aus Sauergut, Cerealienmehl und Hopfen oder einem Hopfenprodukt; und
b. Trocknung und/oder Pasteurisation der Suspension,
wobei das Sauergut eine ungehopfte oder schwach gehopfte Vorderwürze aus dem Brauprozess ist, die mit Milchsäurebakterien vergoren wurde, und
wobei das Sauergut homofermentative Milchsäurebakterien enthält.

12. Verfahren nach Anspruch 11,
wobei die Suspension durch Sprühtrocknung getrocknet wird.

13. Verwendung der Zusammensetzung nach einem der Ansprüche 1 bis 9 als Nahrungsmittel oder als Nahrungsergänzungsmittel, oder zur Herstellung eines Nahrungsmittels oder eines Nahrungsergänzungsmittels.

## Claims

1. Composition comprising at least the following three components:
a. sour wort;
b. cereal flour; and
c. hops and/or a hop product selected from the group consisting of hop powder, hop pellets and hop extract,
wherein the sour wort is an unhopped or lightly hopped first wort from the brewing process which has been fermented with lactic acid bacteria, and wherein the sour wort contains homofermentative lactic acid bacteria.

2. Composition according to claim 1, wherein the sour wort contains lactic acid bacteria of the species *L. amylolyticus* and lactic acid bacteria of a strain which produces predominantly or exclusively dextrorotatory lactic acid.

3. Composition according to one of claims 1 to 2, wherein the cereal flour contains β-glucan.

4. Composition according to one of claims 1 to 3, wherein the cereal flour contains at least 5 wt% β-glucan.

5. Composition according to one of claims 1 to 4, wherein the cereal flour contains at least one substance selected from the group consisting of silicon, silicates, silicic acids, silicon dioxide, silicon halides, organic silicon compounds, zinc, phosphorus, potassium and magnesium.

6. Composition according to one of claims 1 to 5, wherein the composition has a polyphenol content of at least 50 mg/kg.

7. Composition according to one of claims 1 to 6, wherein the composition has a xanthohumol content of at least 5 mg/kg.

8. Composition according to one of claims 1 to 7, wherein the composition has a quercetin content of at least 5 mg/kg.

9. Composition according to one of claims 1 to 8, wherein the composition is in the form of a solution, a suspension, an emulsion, a paste, a powder, a granulate or in the form of chips, flakes, tablets or capsules.

10. Foodstuff or dietary supplement containing the composition according to one of claims 1 to 9.

11. Method for producing the composition according to one of claims 1 to 9, wherein the method comprises the following steps:
a. producing a suspension of sour wort, cereal flour and hops or a hop product; and
b. drying and/or pasteurizing the suspension,
wherein the sour wort is an unhopped or lightly hopped first wort from the brewing process which has been fermented with lactic acid bacteria, and wherein the sour wort contains homofermentative lactic acid bacteria.

12. Method according to claim 11, wherein the suspension is dried by spray drying.

13. Use of the composition according to one of claims 1 to 9 as a foodstuff or as a dietary supplement, or for producing a foodstuff or a dietary supplement.

## Revendications

1. Composition, laquelle comprend au moins les trois composants suivants :
a. matière acide ;
b. farine de céréales ; et
c. houblon et/ou un produit à base de houblon choisi dans le groupe constitué par la poudre de houblon, les granulés de houblon et l'extrait de houblon,
dans laquelle la matière acide est un premier moût non houblonné ou faiblement houblonné issu du processus de brassage qui a été fermenté avec des bactéries lactiques, et dans laquelle la matière acide contient des bactéries lactiques homofermentaires.

2. Composition selon la revendication 1,
dans laquelle la matière acide contient des bactéries lactiques de l'espèce *L. amylolyticus,* et des bactéries lactiques d'une souche qui produit principalement ou exclusivement de l'acide lactique dextrogyre.

3. Composition selon l'une des revendications 1 à 2,
dans laquelle la farine de céréales contient du β-glucane.

4. Composition selon l'une des revendications 1 à 3,
dans laquelle la farine de céréales contient au moins 5% en poids de β-glucane.

5. Composition selon l'une des revendications 1 à 4,
dans laquelle la farine de céréales contient au moins une substance choisie dans le groupe constitué par le silicium, les silicates, les acides siliciques, le dioxyde de silicium, les halogénures de silicium, les composés organiques de silicium, le zinc, le phosphore, le potassium et le magnésium.

6. Composition selon l'une des revendications 1 à 5,
dans laquelle la composition présente une teneur en polyphénols d'au moins 50 mg/kg.

7. Composition selon l'une des revendications 1 à 6,
dans laquelle la composition présente une teneur en xanthohumol d'au moins 5 mg/kg.

8. Composition selon l'une des revendications 1 à 7,
dans laquelle la composition présente une teneur en quercétine d'au moins 5 mg/kg.

9. Composition selon l'une des revendications 1 à 8,
dans laquelle la composition se présente sous la forme d'une solution, d'une suspension, d'une émulsion, d'une pâte, d'une poudre, de granulés ou sous la forme de copeaux, de flocons, de comprimés ou de capsules.

10. Aliment ou complément alimentaire qui contient la composition selon l'une des revendications 1 à 9.

11. Procédé de préparation de la composition selon l'une des revendications 1 à 9,
lequel procédé comprend les étapes suivantes :
a. préparation d'une suspension de matière acide, de farine de céréales et de houblon ou d'un produit à base de houblon ; et
b. séchage et/ou pasteurisation de la suspension,
dans lequel la matière acide est un premier moût non houblonné ou faiblement houblonné issu du processus de brassage qui a été fermenté avec des bactéries lactiques, et dans lequel la matière acide contient des bactéries lactiques homofermentaires.

12. Procédé selon la revendication 11,
dans lequel la suspension est séchée par pulvérisation.

13. Utilisation de la composition selon l'une des revendications 1 à 9 comme aliment ou complément alimentaire, ou pour la préparation d'un aliment ou d'un complément alimentaire.
